# EUROPÄISCHE PATENTANMELDUNG

(11) **EP 1 892 815 A2**
(43) Veröffentlichungstag der Anmeldung: **27.02.2008**
(21) Anmeldenummer: 07114217.8
(22) Anmeldetag: 13.08.2007
(51) Int. Cl.: H02K 5/14

(54) **Elektrische Maschine**

(30) Priorität: 25.08.2006 DE 102006039967
(71) Anmelder: ROBERT BOSCH GMBH, 70442 Stuttgart (DE)
(72) Erfinder: Wiesler, Martin, 76534, Baden-Baden/Neuweier (DE); Wehrle, Andreas, 77770, Durbach (DE)

(57) **Zusammenfassung**

Die Erfindung betrifft eine elektrische Maschine (1) mit mindestens einem Kommutator (5) und mit mindestens einem dem Kommutator (5) kontaktierenden Schleifkontakt (10), wobei der Schleifkontakt (10) mit einer Anpresseinrichtung (12, 13) in Richtung Kommutator (5) mit einer Anpresskraft (F) beaufschlagt ist. Erfindungsgemäß ist vorgesehen, dass die Anpresseinrichtung (12, 13) die Anpresskraft (F) in Abhängigkeit der Maschinenlast einstellend ausgebildet ist.

## Beschreibung

### Stand der Technik

Die Erfindung betrifft eine elektrische Maschine, insbesondere einen Gleichstrommotor oder einen Gleichstromgenerator gemäß dem Oberbegriff des Anspruches 1.

Gleichstrommotoren und Gleichstromgeneratoren bestehen aus einem unbeweglichen Stator, einem drehbar gelagerten Rotor sowie einem Kommutator. Bei einem Kommutator handelt es sich um eine Stromwendeeinrichtung, die zur Bereitstellung eines relativ zur Motorwicklung drehenden bzw. wandernden Stromes dient. In seiner einfachsten Ausführung besteht der Kommutator aus zwei gegeneinander isolierten Halbzylindern, wobei jeder Halbzylinder elektrisch leitend mit einem Spulenende verbunden ist. Die Stromzufuhr zu dem Kommutator erfolgt über federnd gelagerte Schleifkontakte, die üblicherweise als Bürsten bezeichnet werden. Der Kontakt zwischen den Schleifkontakten und dem Kommutator beeinflusst die elektromagnetische Verträglichkeit (EMV) der elektrischen Maschine. Von wesentlichem Einfluss auf die Lebensdauer der mit einem Kommutator ausgestatteten elektrischen Maschinen ist das Verschleißverhalten zwischen den Schleifkontakten und dem Kommutator. In der Regel werden Gleichstrommotoren und Gleichstromgeneratoren mit einem Kommutator ausgestattet. Es existieren jedoch auch wechselstrombetriebene elektrische Maschinen mit einem Kommutator. Hierbei handelt es sich um sog. Universalmaschinen (Reihenschlussmaschinen).

Aus der JP 07 245 916 A ist es bekannt, durch den Einsatz einer speziellen Flachfeder, ähnlich der Funktionsweise eines Relais, einen Überlassschutz zu realisieren. Bei Überschreiten einer maximal zulässigen Temperatur wird die elektrische Verbindung zu dem Kommutator mittels der Flachfeder getrennt.

Aus der JP 06 152 251 A ist ebenfalls ein Überlastschutz für einen Elektromotor bekannt. Hierbei wird eine Hammerbürste bei Erreichen einer Maximaltemperatur vom Kommutator abgehoben.

Die bekannten Überlastschutzeinrichtungen verhindern ein Durchbrennen des Motors. Eine Optimierung des Verschleißverhaltens zwischen Schleifkontakt und Kommutator sowie eine Verbesserung der EMV wird mit den bekannten Lösungen nicht erreicht.

### Offenbarung der Erfindung

### Technisch Aufgabe

Der Erfindung liegt daher die Aufgabe zugrunde, eine elektrische Maschine vorzuschlagen, die einerseits ein verbessertes Verschleißverhalten und andererseits eine verbesserte EMV aufweist.

### Technische Lösung

Diese Aufgabe wird mit den Merkmalen des Anspruches 1 gelöst.

Vorteilhafte Weiterbildungen der Erfindung sind in den Unteransprüchen angegeben.

Der Erfindung liegt der Gedanke zugrunde, die Anpresskraft, mit der mindestens ein Schleifkontakt an den Kommutator angepresst wird, an die momentane bzw. aktuelle Leistung bzw. Last der elektrischen Maschine anzupassen. Die Erfindung kann bei sämtlichen elektrischen Maschinen mit einem Kommutator, unabhängig von der Art der Bestromung, realisiert werden. Gemäß der Erfindung wird der Anpressdruck des Schleifkontaktes (Bürste) auf den Kommutator an den Betriebszustand der elektrischen Maschine angepasst. Hierdurch wird der Verschleiß von Kommutator und Schleifkontakt insgesamt reduziert, da der Schleifkontakt nicht ständig, wie im Stand der Technik, mit maximalem Anpressdruck an den Kommutator anliegt. Dies führt zu einer Erhöhung der Lebensdauer der elektrischen Maschine. Weiterhin wird die elektromagnetische Verträglichkeit aufgrund des an die Maschinenlast angepassten Anpressdruckes reduziert. Bei bekannten Elektromotoren ändert sich die Anpresskraft während des Betriebes der elektrischen Maschine quasi nicht, da der E-Modul der bekannten Anpressfedern sich bei den auftretenden Temperaturschwankungen, insbesondere in einem Bereich von -40°C bis 180°C, quasi nicht ändert. Bei bekannten elektrischen Maschinen liegt der Schleifkontakt auch bei geringen Lasten mit maximaler Anpresskraft an den Kommutator an, was zu einem hohen Reibmoment und damit zu einem schlechten Geräuschverhalten infolge der Stufensprünge, Rauheiten und Koaxialfehler des Kommutators führt. Bevorzugt ändert sich die Anpresskraft zwischen einer Leerlaufdrehzahllast und einer Maximaldrehzahllast um mindestens 10 % oder 20 %. Aufgrund der Erfindung wird die Laufruhe von elektrischen Maschinen verbessert und Leistungsverluste aufgrund des angepassten Reibmoments minimiert.

In Weiterbildung der Erfindung ist mit Vorteil vorgesehen, dass die Anpresseinrichtung derart ausgelegt bzw. ausgebildet ist, dass die Anpresskraft mit steigender Maschinenlast erhöht wird bzw. bei geringer Maschinenlast reduziert wird. Der maximale Anpressdruck und damit der maximale Verschleiß treten nur bei hoher Maschinenlast auf, da insbesondere bei hohen Maschinenlasten ein optimaler Stromübergang sichergestellt werden muss. Je nach Anwendungsfall ist es jedoch auch denkbar, die Anpresskraft und damit das Reibmoment mit zunehmender Maschinenlast zu reduzieren.

Bevorzugt erfolgt die Veränderung der Anpresskraft stufenlos. Es ist jedoch auch denkbar, eine gestufte Änderung der Anpresskraft zu realisieren.

Bevorzugt ist die Anpresseinrichtung in Abhängigkeit zu einer zur Maschinenlast proportionalen Größe arbeitend ausgebildet. Beispielsweise ist es denkbar, dass die Anpresseinrichtung in Abhängigkeit des momentanen Maschinendrehmomentes, der momentanen Drehzahl oder der Maschinentemperatur, also der Abwärme der Maschine, arbeitend ausgebildet ist.

Zur Realisierung der maschinenlastabhängig arbeitenden Anpresseinrichtung gibt es verschiedene Möglichkeiten. Bevorzugt umfasst die Anpresseinrichtung mindestens eine auf den Schleifkontakt direkt oder indirekt wirkende Feder. Bevorzugt wird hierfür eine Feder verwendet, deren Federkraft-Kennlinie temperaturabhängig ist. Insbesondere umfasst die Anpresseinrichtung eine Bimetallfeder. Durch Verwendung einer Bimetallfeder, die unmittelbar oder mittelbar auf den Schleifkontakt einwirkt, kann auf konstruktiv einfache Weise eine temperaturabhängige und damit lastabhängige Variation der Anpresskraft realisiert werden. Bei der Realisierung einer temperaturabhängigen Anpresseinrichtung wird eine gewisse Verzögerung zwischen der Änderung der Maschinenlast und der davon abhängigen Änderung der Anpresskraft in Kauf genommen, da sich die Abwärme zeitversetzt zu einer Änderung der Maschinenlast ändert. Die Anordnung eines temperaturabhängigen Federsystems ist vorteilhaft, da Federsysteme keinem (wesentlichen) Verschleißverhalten unterliegen. Weiterhin sind Federkonstruktionen robust, wodurch sich mit ihnen ausgerüstete elektrische Maschinen auch unter widrigen Betriebsbedingungen einsetzen lassen. Ferner lassen sich bestehende elektrische Maschinen erfindungsgemäß umrüsten, indem vorhandene Anpressfedern mit temperaturunabhängiger Federkennlinie durch Federn mit temperaturabhängiger Federkennlinie ausgetauscht werden. Insbesondere sind Federn geeignet, deren Federkennlinie sich in einem Temperaturbereich von etwa - 40°C bis etwa + 180°C temperaturabhängig ändert.

Je nach vorhandenem Bauraum und gewünschtem zu erzielenden Anpressdruck kann die Feder, insbesondere die Bimetallfeder, als Flachbandfeder, Schraubenfeder, Spiralfeder oder als Rollbandfeder ausgebildet sein. Vorzugsweise werden sog. Mehrdrahtfedern eingesetzt, die aus mehreren Drahtlitzen gewickelt sind, um die Dämpfungseigenschaften des Federsystems zu verbessern.

Je nach Größe der maximal aufzubringenden Anpresskraft und/oder in Abhängigkeit des zur Verfügung stehenden Bauraumes kann die Feder, insbesondere die Bimetallfeder einseitig oder zweiseitig, insbesondere innerhalb des Gehäuses gelagert werden.

Um die erste Feder, insbesondere die Bimetallfeder bzw. deren Schwingungsverhalten zu dämpfen, ist in Weiterbildung der Erfindung mit Vorteil mindestens eine weitere, zweite Feder vorgesehen, die die erste Feder berührend, d.h. kraftbeaufschlagend, angeordnet ist. Die Bimetallfeder und die Einmetallfeder können beispielsweise als parallel angeordnete Flachbandfedern ausgebildet sein, die insbesondere flächig aneinander anliegen, oder die sich zumindest lediglich partiell berühren. Beim Einsatz von Mehrdrahtfedern können ein oder mehrere Metalllitze als Bimetallfedern und die übrigen Litze als Einmetallfedern ausgebildet sein.

Weiterhin denkbar sind Lösungen, in denen als Schraubenfeder, Spiralfeder oder Rollbandfedern ausgestaltete Bimetallfedern und Einmetallfedern miteinander verschlungen sind, um somit das Dämpfungsverhalten sowie das temperaturabhängige Anpressverhalten zu optimieren.

Zusätzlich oder alternativ zur Verwendung mindestens einer Feder als bzw. in der Einpresseinrichtung kann mindestens ein Hebelsystem eingesetzt werden, um eine maschinenlastabhängige Anpresskraft auf dem mindestens einen Schleifkontakt aufzubringen.

Weiterhin ist es denkbar, mindestens einen mit einem Steuergerät verbundenen Aktuator einzusetzen, der auf mindestens einen Schleifkontakt in Abhängigkeit der Maschinenlast einwirkt. Das Steuergerät ist dabei mit mindestens einem Sensor verbunden, der eine zur Motorlast proportionale Größe messend ausgebildet ist. Insbesondere kann die Anpresseinrichtung in Abhängigkeit der Maschinentemperatur, der Maschinendrehzahl oder des Maschinendrehmoments arbeitend ausgebildet sein.

Das Reaktionsvermögen und die Kraftkennlinie auf die Kohle kann durch äußere Wärmezufuhr auf das Federsystem - z.B. über separaten Stromkreis zur Bimetallfeder - beeinflusst werden. Damit können von der Motorwärme und Stromzufuhr unabhängige Kraftverläufe erreicht werden. Von Vorteil kann diese Vorgehensweise im Resonanzbetrieb oder in einem sonst kritischen Lastfall sein.

### Kurze Beschreibung der Zeichnungen

Weitere Vorteile und zweckmäßige Ausführungen der Erfindung sind in den weiteren Ansprüchen, der Figurenbeschreibung und der Zeichnung angegeben.

### Es zeigen:

- Fig. 1:: eine schematische Darstellung eines Elektromotors,
- Fig. 2:: einen Kommutator sowie einen Schleifkontakt, wobei der Schleifkontakt von einer Flachbandbimetallfeder-Anpresskraft beaufschlagt ist,
- Fig. 3:: einen Kommutator und einen Schleifkontakt, wobei der Schleifkontakt über eine kombinierte Bimetall-/Einmetallfeder anpresskraftbeaufschlagt ist,
- Fig. 4:: einen Kommutator und einen Schleifkontakt, wobei der Schleifkontakt an einer Einmetallflachbandfeder gehalten ist, welche punktuell von einer Bimetallfeder anpresskraftbeaufschlagt ist,
- Fig. 5:: eine Anpresseinrichtung mit einer als Schraubenfeder ausgestalteten Bimetallfeder,
- Fig. 6:: eine Anpresseinrichtung mit einer kombinierten, als Spiralfeder ausgebildeten Bimetall/Einmetallfeder,
- Fig. 7:: eine Anpresseinrichtung mit einer Rollbandfeder, die als Bimetallfeder ausgeführt ist,
- Fig. 8:: ein Diagramm, das die Abhängigkeit der Anpresskraft von der Motortemperatur bei ansteigender Motorlast zeigt und
- Fig. 9:: ein Diagramm, das die Abhängigkeit der Anpresskraft von der Motortemperatur bei abfallender Motorlast zeigt.

### Ausführungsformen der Erfindung

In den Figuren sind gleiche Bauteile und Bauteile mit gleicher Funktion mit den gleichen Bezugszeichen gekennzeichnet.

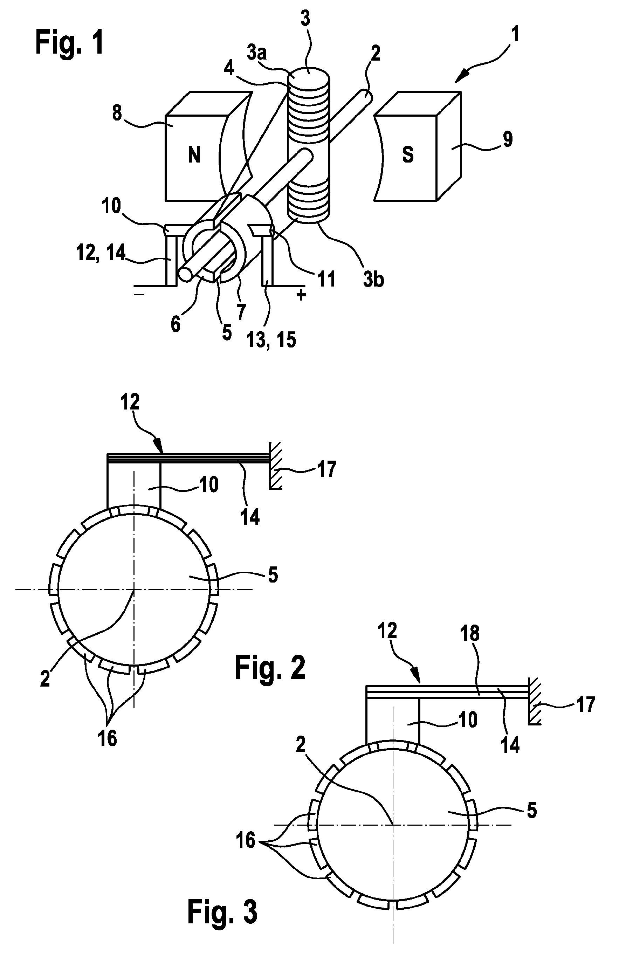

In Fig. 1 ist eine als Gleichstrommotor ausgebildete elektrische Maschine 1 dargestellt. Die elektrische Maschine 1 umfasst einen drehfest auf einer Welle 2 angeordneten Rotor 3, welcher an seinen zwei gegenüberliegenden Abschnitten 3a, 3b mit einer Spule 4 (Wicklung) ausgestattet ist. Die Enden der Spule 4 sind mit je einer Halbschale 6, 7 eines drehfest auf der Welle 2 angeordneten Kommutators 5 verbunden. Die beiden Halbschalen 6, 7 sind gegeneinander isoliert. Der Rotor 3 ist drehbar innerhalb zweier beabstandeter Permanentmagnete 8, 9 angeordnet. An dem Kommutator 5 liegen zwei diametral gegenüberliegende Schleifkontakte 10, 11 an, die den Kommutator 5 und damit die Spule 4 nach jeder Halbdrehung umpolen, damit sich ein wechselndes Magnetfeld ergibt. Jeder Schleifkontakt 10, 11 ist von je einer Anpresseinrichtung 12, 13 mit einer Federkraft in Richtung Kommutator 5 kraftbeaufschlagt. Jede Anpresseinrichtung 12, 13 besteht im vorliegenden Ausführungsbeispiel aus je einer als Bimetallfeder ausgebildeten Feder 14, 15. Die von den Federn 14, 15 auf die Schleifkontakte 10, 11 aufgebrachte Anpresskraft variiert in Abhängigkeit der Abwärme der elektrischen Maschine 1. Im vorliegenden Ausführungsbeispiel steigt die Abwärme leicht zeitverzögert mit zunehmender Maschinenlast, wodurch die von den Federn 14, 15 auf die Schleifkontakte 10, 11 in radialer Richtung nach innen aufgebrachte Anpresskraft ebenfalls zeitverzögert ansteigt. Die Anpresskraft steigt also mit zunehmender Motorlast an. Bei geringer Motorlast herrscht ein nur geringer Anpressdruck vor, was zu einer Reduzierung des Geräuschaufkommens sowie zu einer Minimierung des Verschleißverhaltens des Kommutators und zu einer verbesserten EMV der elektrischen Maschine 1 führt.

In den Fig. 2 bis 7 sind unterschiedliche Ausführungsformen von Anpresseinrichtungen 12, 13 für die Schleifkontakte 10, 11 gezeigt. Sämtliche Anpresseinrichtungen 12, 13 umfassen mindestens eine Feder 14. Daneben ist es denkbar, Anpresseinrichtungen ohne Federmechanismus und/oder in Kombination mit einem Hebelsystem und/oder mit insbesondere elektrisch angesteuerten Aktuatoren vorzusehen.

In Fig. 2 ist ein Kommutator 5 gezeigt, der drehfest auf einer Welle 2 angeordnet ist. An seinem Außenumfang weist der Kommutator 5 eine Vielzahl von gegeneinander isolierten Kontaktabschnitten 16 auf, wobei die Kontaktabschnitte jeweils mit einem nicht gezeigten Spulenende von nicht gezeigten Spulen verbunden sind. An den Kommutator 5 liegt ein als Hammerbürste aus Kohle ausgebildeter Schleifkontakt 10 an. Weitere, zusätzlich vorhandene Schleifkontakte sind aus Übersichtlichkeitsgründen nicht gezeigt. Der Schleifkontakt 10 wird mittels einer Anpresseinrichtung 12, umfassend eine als Flachbandfeder aus Bimetall ausgebildete Feder 14, in Richtung Kommutator 5 federkraftbeaufschlagt. Die als Bimetallfeder ausgebildete Feder 14 ist einends fest mit dem im unteren Bereich konkav gewölbten Schleifkontakt 10 und anderenends mit einem Maschinengehäuse 17 verbunden. Es handelt sich also um eine einseitige Lagerung der Feder 14. Das Federverhalten der Bimetallfeder 14 ist abwärmeabhängig, so dass sich die auf den Schleifkontakt 10 wirkende Anpresskraft in Abhängigkeit der Maschinenlast ändert.

In Fig. 3 ist ein weiteres Ausführungsbeispiel einer Anpresseinrichtung 12 gezeigt. Im Unterschied zu der Anpresseinrichtung 12 gemäß Fig. 2 ist zusätzlich zu der einseitig gelagerten, als Bimetallfeder ausgebildete Feder 14 eine zweite, als Einmetallfeder ausgebildete Feder 18 vorgesehen. Beide Federn 14, 18 liegen aneinander an und sind parallel zueinander ausgerichtet. Rauhe Oberflächen im Berührungsbereich verbessern das Dämpfungsverhalten des Federsystems. Die Feder 14 ist nicht unmittelbar mit dem Schleifkontakt 10 verbunden, welcher an der als Einmetallfeder ausgebildeten Feder 18 befestigt ist. Durch die Kombination aus als Bimetallfeder ausgebildeten Feder 14 und der als Einmetallfeder ausgebildeten Feder 18 wird ein gedämpftes Federsystem erhalten. Ansonsten entspricht die Anordnung aus Kommutator 5, Schleifkontakt 10 und Anpresseinrichtung 12 dem Ausführungsbeispiel gemäß Fig. 2.

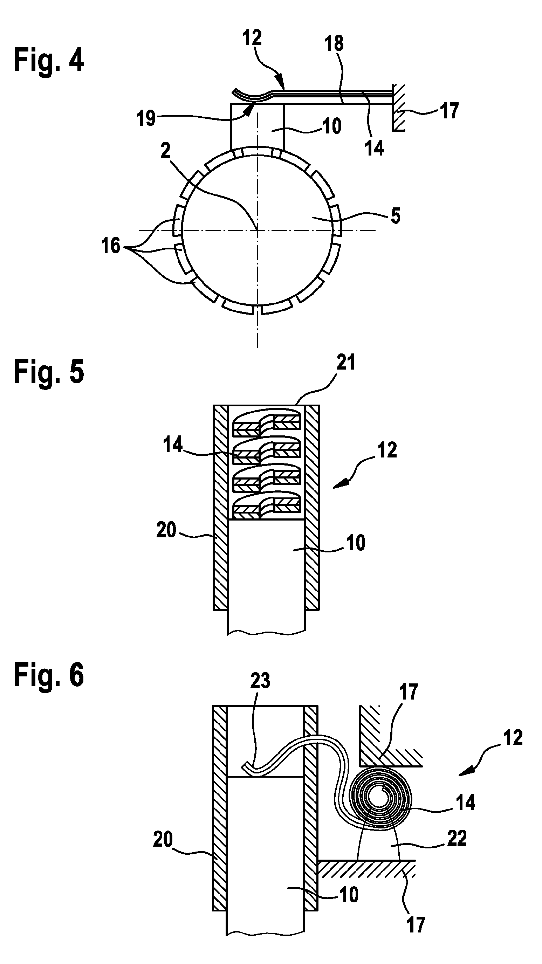

Bei dem Ausführungsbeispiel einer Anpresseinrichtung 12 gemäß Fig. 4 berühren sich die als Bimetallfeder ausgebildete Feder 14 und die als Einmetallfeder ausgebildete Feder 18 nicht großflächig, sondern lediglich punktuell an einem Scheitelpunkt 19 eines gebogenen Abschnitts der Feder 14. Beide Federn 14, 18 sind mit Abstand zueinander einseitig an dem Maschinengehäuse 17 gelagert. Auch hier ist es von Vorteil, wenn die Oberfläche zumindest einer der Federn 14, 18 im Kontaktbereich (Scheitelpunkt 19) aufgerauht ist.

Die Anpresseinrichtung 12 gemäß Fig. 5 weist eine Axialführung 20 für den Schleifkontakt 10 auf. Die als Bimetallfeder ausgebildete Feder 14 ist als Schraubenfeder ausgeführt, die sich einerseits an einem Axialanschlag 21 und andererseits am Schleifkontakt 10 abstützt. Gegebenenfalls kann die als Schraubenfeder ausgebildete Feder 14 mit einer nicht gezeigten Einmetallfeder verschlungen ausgebildet werden.

Bei dem in Fig. 6 gezeigten Ausführungsbeispiel umfasst die Anpresseinrichtung 12 eine als Spiralfeder ausgebildete Feder 14 aus Bimetall, welche an einen Lagervorsprung 22 des Gehäuses 17 einseitig gelagert ist. Mit einem abgewickelten Ende liegt die Feder 14 kraftbeaufschlagend auf dem Schleifkontakt 10 auf, der in einer Axialführung 20 in Richtung des nicht gezeigten Kommutators geführt ist.

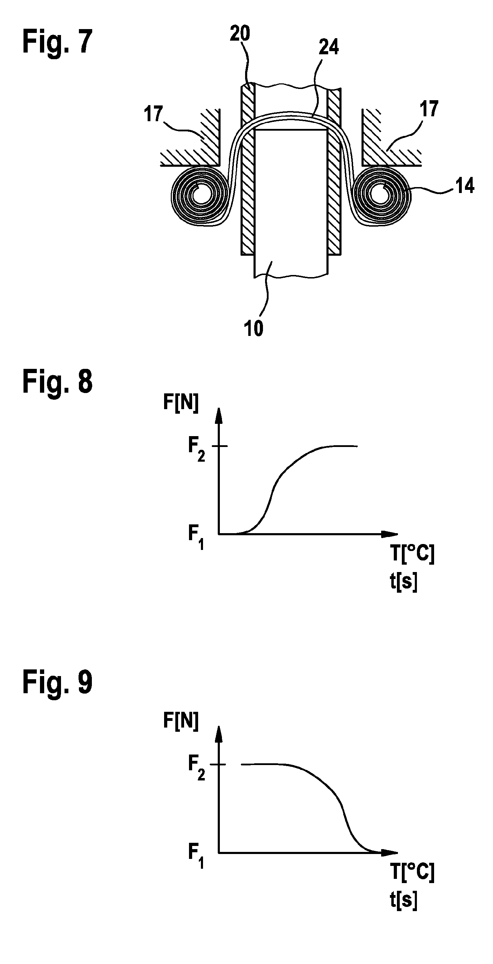

Bei dem Ausführungsbeispiel gemäß Fig. 7 ist die als Bimetallfeder ausgebildete Feder 14 als Rollbandfeder ausgeführt, die an zwei gegenüberliegenden Abschnitten an Vorsprüngen des Gehäuses 17 gehalten ist. Mit einem dazwischenliegenden mittleren Bereich 24 stützt sich die Feder 14 an der Oberseite des in der Axialführung 20 geführten Schleifkontaktes 10 ab. Es ist auch denkbar, mehrere, insbesondere zwei ineinander geschachtelte Rollbandfedern vorzusehen, wobei bevorzugt eine der beiden Federn als herkömmliche Einmetallfeder, insbesondere aus Federstahl, ausgebildet ist, wohingegen die andere Feder als Bimetallfeder ausgebildet ist. Bevorzugt sind die ineinander verschachtelten Rollbandfedern an ihren Berührungsflächen aufgerauht ausgebildet, um das Dämpfungsverhalten zu verbessern.

In den Diagrammen gemäß Fig. 8 und 9 ist das Federkraftverhalten über die Zeit t bzw. über die Maschinentemperatur T gezeigt. In Fig. 8 ist zu erkennen, dass die Anpresskraft bei steigender Maschinentemperatur, d.h. bei steigender Maschinenlast, ebenfalls ansteigt. Es ist jedoch zu berücksichtigen, dass die Maschinentemperatur leicht zeitversetzt mit zunehmender Maschinenlast ansteigt.

In Fig. 8 ist das Verhalten der Anpresskraft F bei sinkender Maschinentemperatur T gezeigt. Die Anpresskraft F sinkt mit abnehmender Maschinentemperatur T, wobei auch hier die Maschinentemperatur T leicht zeitverzögert mit abnehmender Maschinenlast sinkt.

## Patentansprüche

1. Elektrische Maschine, insbesondere Gleichstrommotor oder Gleichstromgenerator, mit mindestens einem Kommutator (5) und mit mindestens einem den Kommutator (5) kontaktierenden Schleifkontakt (10, 11), wobei der Schleifkontakt (10, 11) mit einer Anpresseinrichtung (12, 13) in Richtung Kommutator (5) mit einer Anpresskraft (F) beaufschlagt ist,
**dadurch gekennzeichnet,**
**dass** die Anpresseinrichtung (12, 13) die Anpresskraft (F) in Abhängigkeit der Maschinenlast einstellend ausgebildet ist.

2. Elektrische Maschine nach Anspruch 1, **dadurch gekennzeichnet, dass** die Anpresseinrichtung (12, 13) die Anpresskraft (F) mit steigender Maschinenlast erhöhend ausgebildet ist und/oder die Anpresseinrichtung (12, 13) die Anpresskraft (F) mit steigender Maschinenlast reduzierend ausgebildet ist.

3. Elektrische Maschine nach einem der Ansprüche 1 oder 2, **dadurch gekennzeichnet, dass** die Anpresseinrichtung (12, 13) die Anpresskraft (F) gestuft oder stufenlos einstellend ausgebildet ist.

4. Elektrische Maschine nach einem der vorhergehenden Ansprüche, **dadurch gekennzeichnet, dass** die Anpresseinrichtung (12, 13) die Anpresskraft (F) in Abhängigkeit der Abwärme der elektrischen Maschine (1) einstellend ausgebildet ist.

5. Elektrische Maschine nach einem der vorhergehenden Ansprüche, **dadurch gekennzeichnet, dass** die Anpresseinrichtung (12, 13) mindestens eine erste Feder (14), insbesondere eine erste Bimetallfeder, umfasst.

6. Elektrische Maschine nach Anspruch 5, **dadurch gekennzeichnet, dass** die erste Feder (14), insbesondere die erste Bimetallfeder, als Flachbandfeder, oder als Schraubenfeder, oder als Spiralfeder, oder als Rollbandfeder, und/oder als Mehrdrahtfeder ausgebildet ist.

7. Elektrische Maschine nach Anspruch 5, **dadurch gekennzeichnet, dass** die erste Feder (14), insbesondere die erste Bimetallfeder, einseitig oder zweiseitig benachbart zu dem Schleifkontakt (10, 11) gelagert ist.

8. Elektrische Maschine nach einem der vorhergehenden Ansprüche, **dadurch gekennzeichnet, dass** die Anpresseinrichtung (12, 13) mindestens eine zweite Feder (18), vorzugsweise eine Einmetall umfasst.

9. Elektrische Maschine nach Anspruch 8, **dadurch gekennzeichnet, dass** die zweite Feder (18) die erste Feder (14), insbesondere partiell oder flächig, berührend angeordnet ist.

10. Elektrische Maschine nach einem der vorhergehenden Ansprüche, **dadurch gekennzeichnet, dass** die Anpresseinrichtung (12, 13) ein Hebelsystem und/oder einen Aktuator umfasst.

11. Elektrische Maschine nach einem der Ansprüche 5 bis 10, **dadurch gekennzeichnet, dass** eine Heiz- und/oder Kühlwicklung zur Zuführung von Wärme und/oder Kälte zu der ersten und/oder der zweiten Feder vorgesehen ist.
